# EUROPEAN PATENT SPECIFICATION

(11) **EP 3 721 721 B1**
(45) Date of publication and mention of the grant of the patent: **24.01.2024**
(21) Application number: 20169018.7
(22) Date of filing: 09.04.2020
(51) Int. Cl.: A23P 20/10, A23P 20/20, B65D 75/26, B65D 75/28, B65D 65/46, A22C 13/00

(54) **AN EDIBLE MULTILAYERED MATERIAL, A RELATIVE PRODUCTION METHOD AND A PACKAGING METHOD OF FOOD PRODUCTS USING THE MATERIAL**
ESSBARES MEHRSCHICHTIGES MATERIAL, VERFAHREN ZU SEINER HERSTELLUNG UND VERFAHREN ZUM VERPACKEN VON NAHRUNGSMITTELN UNTER VERWENDUNG DIESES MATERIALS
MATÉRIAU MULTICOUCHE COMESTIBLE, PROCÉDÉ DE PRODUCTION ASSOCIÉ ET PROCÉDÉ D'EMBALLAGE DE PRODUITS ALIMENTAIRES UTILISANT LE MATÉRIAU

(30) Priority: 11.04.2019 IT 201900005584
(43) Date of publication of application: 14.10.2020
(73) Proprietor: IUV S.r.l., 48123 Ravenna (IT)
(72) Inventor: Palopoli, Cosimo Maria, 51100 Pistoia (PT) (IT)
(74) Representative: Dall'Olio, Christian

(56) References cited:
- EP-A1- 1 568 346
- WO-A1-2018/172781
- WO-A2-2007/149276
- US-A- 4 375 481
- US-A- 5 124 169

## Description

The present invention relates to the technical sector concerning edible materials, in particular multilayer, to the relative production methods and packaging methods of food products using the material.

The need to reduce packaging refuse is known, especially in the foodstuffs field, ensuring the conservability of the food product contained therein. Further, a need is felt to package the food products with safe packaging which do not yield substances or damaging elements to the products contained therein.

For this purpose packaging methods of food products have been researched with relative edible materials. These edible materials are obtained directly on the food product to be packaged by exploiting the principles of the culinary techniques known as "direct spherification" and "indirect spherification" which enable encapsulation of a liquid in small spheres using sodium alginate and an edible calcium salt. In particular a packaging method of a liquid food product has been published which uses techniques alike to spherification, and comprises the following steps: freezing the liquid food product in the desired form, cooling with liquid nitrogen; introducing the frozen solid obtained into a solution of sodium alginate and then into a solution of calcium ions. The reaction between sodium alginate and the bivalent calcium ions causes the formation of a layer having a reticulated structure formed by the reticulated alginate with the calcium and/or a cross-link constituted by the alginate and the calcium. The food product coated with this layer can be newly placed in the alginate solution and then in the calcium solution repeatedly to obtain a more resistant and rigid wrapping with respect to what is obtainable with a single passage. Unfortunately the structure of the wrapping, even when repeatedly passed in the solution, has been shown to be poorly resistant and elastic. In addition, the wrapping does not have an adequate barrier effect against moisture in order to be used as a primary packaging.

WO 2018/172781, which has as an objective the obviating of the fact that the spherification cannot be used for large volumes, describes a packaging method in which a food product is encapsulated in a wrapping made of an edible material. The method includes the following steps: mixing an alginate (i.e. a hydrocolloid substance), and a thickener (which can be a further hydrocolloid substance) and extruding the mixture thus-obtained through a suitably-profiled die to form a membrane, distributing a calcium ion solution to reticulate the membrane and creating a membrane that is insoluble in water; filling the insoluble membrane with the product (for example the liquid product); and sealing the membrane about the product, thus encapsulating it. No embodiment is given by way of example of the above method. Alternatively, WO2018/172781 describes a further packaging method which includes following steps: mixing the alginate and the thickener and extruding the mixture thus-obtained through a suitably-profiled die to form a membrane that is typically tubular in shape; applying, on the outer surface of the membrane, a calcium ion solution to cross-link the membrane and make it insoluble in water; mechanically squeezing the membrane, while the cross-linking is propagated through the thickness of the membrane, in order to create a pouch; filling the pouch with a food product; and sealing the membrane by compression while the cross-linking is propagated through the thickness of the membrane, encapsulating the product within it. Obviously this method can be actuated only with a particular plant created *ad hoc* and contemporaneously extruding the membrane; applying the calcium ion solution; and pouring the food product into the membrane which is still reticulating. It is obvious that this plant is not very versatile and difficult to obtain by modifying the traditional automatic packaging plants which use the convention packaging materials (Tetra pack, plastic paper etc.). Further, WO2018/172781 indicates that the diameter of a large-dimension membrane is equal to or greater than 38 mm, as it does not enable encapsulation in wrappings having greater dimensions and thus describes packaging methods that are not particularly versatile.

US4375481A discloses several configuration of an edible multiplayer material. In particular EXAMPLE 2 of US4375481A is as follows:
"*A four-member nozzle unit composed of four concentrically arranged nozzles having an inside diameter of 1 mm, 5 mm, 7.5 mm and 9.5 mm, respectively, was used. A salad oil containing a commercially available fish flavor (salmon oil) and colored to orange red with a commercially available oily natural food dye, a sol containing 5% of gelatin and 0.3% of guar gum and colored to pale yellow orange with a commercially available aqueous natural food dye, a sol containing 5% of gelatin, 1% of pectin and 0.5% of calcium lactate, and a sol containing 1% of sodium alginate were synchronously discharged through the nozzles having an inside diameter of 1 mm, 5 mm, 7.5 mm, and 9.5 mm, respectively, to form sol droplets. The sol droplets were dropped into a 3% aqueous solution of calcium lactate kept at 10 DEG C., and chemically gelled for 3 minutes. The particulate product was taken out, and lightly washed with water. An artificial roe composed of an oily material, an aqueous sol layer, a soft aqueous gel layer and a hard covering gel layer could be obtained.*

*The artificial roe was very similar to a salted salmon roe and had superior strength, shape, retention, water-holding property, palatability, color and smell.*"

Therefore example 2 relates to a three-layer multilayer material in which: the first layer is an aqueous sol layer comprising two hydrocolloid substances (gelatin and guar gum) therefore the first layer does not comprises a single first hydrocolloid substance; the second layer that is a soft gel comprising two hydrocolloid substances, namely gelatin and pectin; the third solid layer comprises a single hydrocolloid substance which is sodium alginate. Note that one of the two hydrocolloid substances of the second layer is the same as one of the two hydrocolloid substances of the first layer.

EXAMPLE 4 of US4375481A is as follows:
"*A five-member nozzle unit composed of five concentrically arranged nozzles having an inside diameter of 1 mm, 5 mm, 7.5 mm, 9.5 mm and 11.5 mm respectively was used. A salad oil containing a commercially available fish flavor (salmon oil) and colored to orange red with a commercially available oily natural food dye, a sol containing 10% of gum arabic colored to orange red with a commercially available aqueous natural food dye, a sol containing 5% of zein, a sol containing 3% of pectin and 0.2% of sodium alginate, and a sol containing 0.8% of sodium alginate were synchronously discharged through these nozzles having an inside diameter of 1 mm, 5 mm, 7.5 mm, 9.5 mm, and 11.5 mm, respectively, to form sol droplets. The sol droplets were dropped into a 5% aqueous solution of calcium lactate kept at 15 DEG C., and allowed to stand for 6 minutes to gel them chemically. The particulate product was taken out and lightly washed with water.*

*The particulate product was an artificial roe of a five-layer structure composed of an oily material, an aqueous sol layer, a weak aqueous gel layer, a covering gel layer, and a strong covering gel layer. It was very similar to a salted salmon roe and had superior strength, shape retention, water-holding property, palate, color and smell.*"

Consequently example 4 relates to a tetra-layer material wherein: the first layer is an aqueous sol and includes a single hydrocolloidal substance (gum arabic); the second layer that it is a soft gel containing a non-hydrocolloid substance that is zein; the third layer contains two hydrocolloid substances which are pectin and sodium alginate; a fourth solid layer comprising a single hydrocolloid substance which is sodium alginate and wherein one of the two hydrocolloid substances of the third layer is the same as the hydrocolloid substance of the fourth layer.

It is therefore necessary to make available an edible material which guarantees better structural mechanical performance in particular resistance and elasticity and barrier effect to humidity and which can be used for primary packaging of food products in portions of different weights and/or volumes.

The aim of the present invention is to describe one that is able to obviate the drawbacks mentioned in the foregoing relative to the above-mentioned edible materials and relative encapsulation methods.

The above aims and objectives are obtained with: an edible multilayer material according to claim 1, a relative production method according to claim 5 and with a packaging method of food products with the material according to claim 6.

The nature of this edible multilayer material enables a reduction in the use of the conventional packaging materials, and in particular plastic, to package the food products.

The structure of the edible multilayer material is more resistant and elastic with respect to the known edible materials; further, it demonstrates a greater barrier effect to humidity, leaving the taste and palatability unaltered.

Note that, in accordance with the invention, it is possible to limit the consumption of traditional wrapping for the packaging of food products destined to be eliminated, at the same time guaranteeing greater resistance, barrier effect and shelf-life with respect to the edible multilayer materials of known type. In particular, the greatest resistance or resilience to falling from a height or to compression in comparison with the edible multilayer material of known type, given identical other conditions, enables stacking a greater number of packaged food products in a primary packaging, while reducing the quantity of secondary packaging whether for storage both during transport and in retail outlets in display units. It is also stressed that the edible multilayer material does not give the packaged foodstuff any particular taste and that in any case it can be thrown away together with the organic fraction of domestic waste, as it can be composted.

The edible multilayer material according to the invention is set in independent claim 1 The first hydrocolloid substance and the third hydrocolloid substance are different to one another and wherein, if the second hydrocolloid substance is present, the second hydrocolloid substance is different from the first hydrocolloid substance and third hydrocolloid substance. That is: the first, second and third hydrocolloid substance are different to one another or, in other words, the first and the third and the second hydrocolloid substance, when present, are different to one another.

The first layer preferably adheres directly to the second and the third layer adheres to the second layer, obviously on the opposite side to the first layer.

When the edible multilayer material according to the invention is not obtained by directly forming in contact on a portion of foodstuff to be packed, it can be obtained by means of a relative production method comprising following steps:
preparing a first dispersion which is colloid, aqueous, edible and comprises (and is preferably constituted by): only a single first hydrocolloid substance; and, optionally, a food additive and/or a probiotic;
preparing a second dispersion which is aqueous, edible comprising (and preferably constituted by): a compound selected from a group consisting of: a second hydrocolloid substance, preferably a single second hydrocolloid substance); cellulose; an edible wax; an edible resin; and, optionally, a food additive and/or a probiotic;
preparing a third dispersion which is aqueous colloid, edible and comprises (and is preferably constituted by): only a single third hydrocolloid substance; and, optionally, a food additive and/or a probiotic; wherein the first hydrocolloid substance and the third hydrocolloid substance are different to one another and
wherein, if the second hydrocolloid substance is present, the second hydrocolloid substance is different to the first hydrocolloid substance and third hydrocolloid substance (i.e. the first, second and third hydrocolloid substance are different to one another or, in other words, the first and the third and the second hydrocolloid substance, when present, are different to one another)
preparing an aqueous solution comprising a cation of a bivalent metal selected from a group consisting of calcium, magnesium, strontium and zinc;
   - uniformly and singly distributing the first, second and third dispersion on a relative support surface so as to obtain, respectively, a first, a second and a third liquid film;
   - drying the first, second and third liquid film so as to respectively obtain a first, a second and a third solid film;
   - optionally distributing said aqueous solution on the first solid film and/or second solid film and/or third solid film;
   - coupling, preferably automatically, to one another a surface of the first solid film to a first surface of the second solid film distributing on at least one of the surfaces, water vapour (for example by hydro-welding), a glue, an adhesive or the aqueous solution; and/or heating at least one of the surfaces (preferably both) and pressing the first solid film and second solid film onto one another; wherein, when the preceding optional distribution step is not carried out, at least the aqueous solution is distributed at least on one of the surfaces to be coupled;
   - coupling, preferably automatically, a surface of the third solid film to a second surface of the second solid film, opposite the first surface of the second solid film, distributing, on at least one of the surfaces to be coupled, water vapour, a glue, an adhesive or said aqueous solution and/or by heating at least one of these surfaces (preferably both); and pressing the second solid film and third solid film on one another, wherein, when the preceding optional distribution step is not carried out, at least said aqueous solution is distributed at least on one of the surfaces to be coupled.

During the coupling steps of the solid films, the sub-steps of heating a surface of the films and the sub-steps of pressing the solid films can also be carried out at the same time.

Note that the first, second and third liquid film constitute a first and a second and third patina. In fact, the terms "liquid film" is intended to more suitably describe a "patina". To obtain the edible multilayer material according to the invention, a subsequent step of drying and/or desiccation, at least partial, of the three solid films coupled, for example by means of direct desiccation (in an oven, under a vacuum, by natural desiccation, etc.

When a glue or an adhesive is used, they must conform to EU regulation UE 1935/2004 and the multilayer material according to the invention can comprise one or two very slim layers of glue or adhesive between the second layer and the first and/or third layer. By way of indication, the total thickness of the edible multilayer material can be: smaller than or equal to 0.2 mm, the thickness of the first or second layer can be smaller than or equal to 70 µm, the thickness of the second layer can be smaller than or equal to 40 µm and the thickness of the layers of glue or adhesive smaller than or equal to 10 µm. The glues and adhesives can be of vegetable and/or animal origin: starches, caseins, animal glues, fish glues, rubber, etc.

The multilayer material according to the invention, when obtained using techniques alike to spherification, can be considered consistent in the first, second and third layer. In this case they can have a relative thickness, respectively, that is smaller than or equal to 135 µm, smaller than or equal to 75 µm and smaller than or equal to 135 µm, with an overall thickness of smaller than or equal to 0.345 mm. The layers are observable by microscopy by surface and microstructure analysis, and the relative composition can be analysed using laboratory analytical techniques such as for example chromatography, mass spectrometry, NMR analysis, thermal analysis, analysis of physical properties, FTIR analysis. Further, in a case where there is calcium present, a specific calcium marker can be used: i.e. fura-2, indo-1, fluo-3, fluo-4, Calcium Green-1. Relatively to the other cations these can be detected by means of fluorescence imaging.

In this method the first hydrocolloid substance is preferably an alginate.

Further, intermediate steps can be included for the finishing of the thickness of each single solid film, with the purpose of making them uniform. The two coupling steps can be advantageously carried out at the same time using a lamination device predisposed to laminate at least three solid films together.

To achieve a gloss, guarantee adherence of adhesives and/or guarantee printing of inks to the edible multilayer material, the material can be subjected to an electrostatic treatment, known in the literature as the Corona treatment. Lastly, a finishing step of the dimensions (thickness, width and length) of the edible multilayer material can be included as well as a subsequent step of winding on a relative reel by finishing and winding means of known type.

It is preferable to use the multilayer material according to the invention for packaging a food product. This can be carried out by producing the material during the packaging by exploiting, for example the known techniques alike to spherification of foodstuffs, or by using a sheet of the multilayer material according to the invention, obtained by means of the relative production method as claimed. In any case, the packaging method of a food product according to the invention comprises following steps: having available a food product; realising a wrapping in direct contact with a portion of the food product. The method is characterised in that the wrapping is made of an edible multilayer material according to the invention.

In each layer of the multilayer material according to the invention, the hydrocolloid substance, or compound, and the bivalent cation form a cross-link.

For the purposes of the present invention, the term probiotics is taken to mean, in accordance with the definition of the term given by the United Nations Food and Agriculture Organisation, live micro-organisms which when administered in an adequate quantity benefit the health of the host. These probiotics are preferably lactic bacteria i.e. micro-organisms belonging to the Lactobacillus genus.

For the purpose of the present invention, the terms resins and waxes of animal or vegetable origin relate to edible waxes, non-esterified long-chain fatty acids with a number of 16-36 carbon atoms, ramified or not, i.e. linear, preferably animal or vegetable, while the term edible resin is taken to mean edible terpene-based polymers.

The second layer can preferably comprise at least two of the compounds, in particular at least two different types of the second hydrocolloid substance. The embodiments in which the second layer comprises a single second hydrocolloid substance are however preferred.

. The embodiments and actuations of the invention that are more preferable are those in which the first hydrocolloid substance is selected from a group consisting of: alginates and xanthan gum; the second hydrocolloid substance, when present, is selected from a group consisting of: starches; gellan and carob seed flours, the third hydrocolloid substance is selected from a group consisting of: agar; carrageenan; galactomannans; cellulose derivatives; and konjac, and/or the compound is selected from a group consisting of: cellulose; resins and waxes of animal or vegetable origin.

The first hydrocolloid substance is advantageously alginate and the first layer is the one destined to contact the food product.

Particularly preferred, as they possess greater performance characteristics, are the edible multilayer materials of the invention, selected from a group constituted by edible multilayer materials wherein: the first hydrocolloid substance is agar-agar, the second hydrocolloid substance is gellan gum and the third hydrocolloid substance is alginate; the first hydrocolloid substance is agar-agar, the second hydrocolloid substance is a starch and the third hydrocolloid substance is alginate; the first hydrocolloid substance is agar-agar, the second hydrocolloid substance is konjac and the third hydrocolloid substance is alginate; the first hydrocolloid substance is agar-agar, the second hydrocolloid substance is starch and the third hydrocolloid substance is cellulose; the first hydrocolloid substance is agar-agar, the second hydrocolloid substance is gellan gum and the third hydrocolloid substance is cellulose; the first hydrocolloid substance is agar-agar, the second hydrocolloid substance is konjac and the third hydrocolloid substance is cellulose; the first hydrocolloid substance is alginate, the second hydrocolloid substance is starch and the third hydrocolloid substance is cellulose; the first hydrocolloid substance is alginate, the second hydrocolloid substance is gellan gum and the third hydrocolloid substance is cellulose; the first hydrocolloid substance is alginate, the second hydrocolloid substance is konjac and the third hydrocolloid substance is a cellulose derivative.

The packaging method of food products according to the invention can advantageously comprise that the edible multilayer material according to the invention is obtained during the packaging according to the known techniques alike to spherification, and thus can comprise the following steps: having available a portion of a solid food product (this can also be a liquid or a semi-solid food product that has been deep-frozen and/or frozen); obtaining a first layer comprising: the first hydrocolloid substance edible and at least partially dried; a cation of a bivalent metal selected from a group consisting of calcium, magnesium, strontium and zinc and, optionally, a food additive and/or a probiotic; the first layer being in direct contact with the portion of the solid food product; obtaining a second layer comprising: the second hydrocolloid substance edible and at least partially dried; a cation of a bivalent metal; and, optionally, a food additive and/or a probiotic; the second layer being in direct contact with the first layer; obtaining a third layer comprising: a single third hydrocolloid substance, edible and at least partially dried; a cation of a bivalent metal; and, optionally, a food additive and/or a probiotic; wherein the third layer is in direct contact with the second layer and wherein in order to obtain a portion of the food product coated by a covering made of an edible multilayer material according to the invention. The obtaining of each single layer can be carried out by immersion in, by spraying on, the solution of a cation of a bivalent metal and subsequent immersion in the corresponding dispersion or vice versa.

When the food product to be packaged is liquid, semi-liquid or semi-solid, the packaging method of food products according to the invention can include that the step of making available a portion of a solid food product comprises a step of freezing and/or deep-freezing of a portion of the liquid or semi-liquid or semi-solid food product optionally mixed with a cation of a bivalent metal selected from a group consisting of calcium, magnesium, strontium and zinc, and that the step of obtaining the first layer, in a case in which the portion of food product has not been mixed with the at least one cation of a bivalent metal, includes: a first distribution step on the surface of the portion of frozen and/or deep-frozen product of a first liquid selected from among the aqueous solution and the first dispersion; and a subsequent distribution step on the surface of the portion of frozen and/or deep-frozen product, on the surface of which the first liquid has been distributed, of a second liquid selected from among; the aqueous solution and the first dispersion, in which the first liquid is different to the second liquid. In that case, the step of obtaining the first layer preferably comprises a first distribution step of the aqueous solution on the surface of the portion of frozen and/or deep-frozen product and a subsequent immersion step of the portion of frozen and/or deep-frozen product, on the surface of which the aqueous solution in the first dispersion.

The distribution steps can take place by immersion and/or spraying. Spraying is preferably as it impacts less on the palpability and taste of the packaged product.

In a preferred aspect of the invention, the first dispersion and/or the third dispersion respectively consist of: water, the first hydrocolloid substance and, optionally, a food additive and/or a probiotic; and of: water, the third hydrocolloid substance; and, optionally, a food additive and/or a probiotic. By way of nonlimiting example, the concentration of the cation of the bivalent metal in the relative solution is given at between 1 and 10% (in particular when used in the production method according to the invention) and is advantageously comprised between 1% e 5% expressed as the weight of the cation divided by the volume of the solution. Likewise it is given that the concentration of the first hydrocolloid substance, the compound and the third hydrocolloid substance, respectively, in the first, second and third dispersion, can be comprised between 0.1 and 2% expressed as the weight of the relative substance or compound divided by the volume of the relative dispersion.

The packaging method of food products according to the invention advantageously comprises a step of mixing with the liquid or semi-liquid food product a cation of a bivalent metal selected from a group consisting of calcium, magnesium, strontium and zinc, previous to the step of freezing and/or deep-freezing. This mixing can take place by direct dissolving, in the liquid or semi-liquid food product, a salt or a water-soluble compound of the metal or by mixing of the aqueous solution of the bivalent cation with the liquid or semi-liquid food product.

The first, second and third layer of the edible multilayer material according to the invention, and the first, second and third dispersion and the aqueous solution preferably comprise at least one substance selected from a group consisting of calcium chloride, calcium gluconate, calcium lactate, magnesium chloride, strontium chloride, zinc chloride, more preferably, the cation is calcium chloride and/or calcium lactate. It is further more preferable for the cation to be a calcium or magnesium cation, and more preferably it is a calcium cation.

In a particularly preferred embodiment of the packaging method of the invention, as it enables avoiding the technical notes alike to spherification and simplifies the packaging, this method can comprise following steps:
- having available a portion of a solid food product;
- having available a sheet made of the edible multilayer material according to the invention and obtainable by actuating the production method according to the invention;
- arranging the sheet about the portion of the solid foodstuff, surrounding the portion completely and with the flaps of the sheet next to and/or superposed on one another and with the first layer of the edible multilayer material being in contact with a portion of a food product:
- joining the flaps of the next to and/or superposed sheet by means of water vapour, a glue, an adhesive or an aqueous solution (preferably with water vapour or the aqueous solution) and/or heating at least one of the flaps and pressing the flaps to one another.

This advantageously enables using, for the packaging a multilayer material according to the invention already produced which therefore does not require being made at the moment of packaging such as for example is necessary during the packaging using techniques alike to spherification. Therefore, the packaging of the solid food product with the multilayer material according to the invention is facilitated and simplified.

A particularly preferred embodiment of the packaging method according to the invention, wherein the food product is a solid food product, and wherein the packaging method is automatic and comprises following steps:
- making available a plurality of portions of the solid foodstuff;
- making available a strip of edible multilayer material according to the invention (and obtainable with the relative production method claimed), the strip having relative longitudinal edges;
- automatically superposing the longitudinal edges of the strip, automatically joining them to one another, by means of water vapour, a glue, an adhesive or an aqueous solution (preferably with water vapour or the aqueous solution) comprising a cation of a bivalent metal selected from a group consisting of calcium, magnesium, strontium and zinc, and/or heat, and a following or contemporary pressure, obtaining a tubular portion of the edible multilayer covering;
- automatically closing the tubular portion at a relative lower transversal section of the tubular portion, by means of water vapour, a glue, an adhesive or said aqueous solution (preferably with water vapour or the aqueous solution) and/or heat, and following and/or contemporaneous pressure, obtaining an open container and realised in the edible multilayer covering; and preferably it is contemporaneous when heat is used;
- automatically inserting at least a portion of the plurality of portions in the open container, obtaining an open and filled container;
- automatically closing the open and filled container, at a relative upper section thereof by means of water vapour, a glue, an adhesive of the aqueous solution (preferably with water vapour or the aqueous solution) and/or heat, and a following or contemporary pressure, obtaining a closed container in the edible multilayer covering.

For the steps of closure and/or joining, the use of water vapour is preferred, as it facilitates a solid joining of the flaps; as well as offering the possibility of being able to make the area of closure and/or joining a low microbial load area.

The automatic packaging method, in the case in which heat is not used, can be carried out using a packaging plant in which the primary packaging material supplied is a strip of multilayer material according to the invention and comprising distribution means of water vapour, a glue, an adhesive or the aqueous solution predisposed to distribute the above on the longitudinal edges of the strip advancing along the plant and on the lower transversal section of the tubular portion advancing along the plant and along an upper section of the open and filled container advancing along the plant.

The use of glues and/or steam and/or the aqueous solution and/or heat, in the above-described steps of superposing/joining and closure, guarantees optimal grip of the filled container obtained in this way, and adequate breaking load resistance and appropriate safety and hygiene relative to contaminations by any eventual contaminating micro-organisms.

A particular preference is for a food group, comprising a portion of a food product and a wrapping made of an edible multilayer material according to the invention, in particular with the relative first layer in contact with the portion of food product, as the wrapping enables limiting consumption of traditional packaging destined to be eliminated, guaranteeing greater resistance, a barrier effect and shelf-life with respect to the edible multilayer materials of known type. In particular, the greatest resistance or resilience to falling from a height or to compression of the edible multilayer material of known type, given identical other conditions, enables stacking a greater number of food complexes (i.e. packaged food products) while reducing the quantity of secondary packaging whether for storage or during transport or in retail outlets in display units.

The food group according to the invention, in which the food product is coffee in any form and especially if it comprises coffee in granules, ground, liquid or soluble coffee, is considered to be particularly advantageous. The food complex is preferably constituted by a pod or a capsule made of the edible multilayer material according to the invention, containing ground coffee and usable in coffee dispensing machines, in particular espresso coffee. In this way the pod or empty capsule can be eliminated with the organic waste, as it is completely edible and compostable.

In relation to the second layer, in any embodiment it is possible for it to comprise two hydrocolloid substances and/or one or more hydrocolloid substance and an edible wax and/or an edible resin.

In all embodiments and actuations of the invention, the additives can preferably be selected from the group consisting of antioxidants, preservatives, sweeteners, flavourings and colorants, in particular if identified as additives in the Rules (UE) no. 1129/2011 of the Commission of November 11th 2011. The preferred additives are those listed in EU Rules UE 1129/2011 and are indicated by the letter E: antioxidants E 300, E301 E302, E 304, E 306 E E309, E 310, E 311, E 312, E 320, E 321, E 322, E 325 E 327, E 330, E 331 E 333, E 334 E 337,E 338; preservatives: E 200 E 203, E 210 E 213, E 214 E 219, E 220 E 227, E 230, E 231 E 232, E 233, E 234, E 235, E 236 E 238, E 239, E 240, E 249 E 250, E 251 E 252, E 260 E 263, E 270, E 280 E 283; and sweeteners E 950, E 951, E 952, E 953, E 954, E 957, E 959, E 965i, and E 965ii. Obviously the concentration of the additives in the edible multilayer material according to the invention will have to be such as not to exceed the relative limit included in parts C and E of the Rules. This is also applied to the cations of bivalent metals, when the following compounds listed in the EU Rules UE 1129/2011 are used: E 509 calcium chloride, E 578 calcium gluconate, E 511 magnesium chloride and E 327 calcium lactate) and to the hydrocolloid substances, cellulose; edible waxes; and the edible resins also listed in the above-mentioned Rules: E 418 gellan; E 406 agar-agar; E 425 konjac; E 400 alginic acid;E 401 sodium alginate; E 402 potassium alginate; E 403 ammonium alginate; E 404 calcium alginate; E 405 propane-1,2-diol alginate; E 901 beeswax, white and yellow; E 902 candelilla wax; E 903 Carnauba wax; E 460 cellulose; E 461 methyl cellulose; E 463 hydroxypropylcellulose; E 464 hydroxypropylmethylcellulose; E 465 ethyl methyl cellulose; E 466 carboxymethylcellulose; E 468 cross-linked sodium carboxymethylcellulose; E 426 and soybean hemicellulose

### EXAMPLES

### Example 1: Food product: bite-size mozzarella morsels.

An aqueous solution of calcium chloride at 2% w/v was prepared, the salt dissolved by being shaken continuously up to complete solubilisation.

First dispersion: an aqueous dispersion of sodium alginate at 1% w/v was prepared, the alginate dissolved at a temperature of 85-90 °C for about 20 min while being shaken continuously up to complete solubilisation.

Second dispersion: An aqueous dispersion of gellan gum at 0.5% w/v was prepared, the gellan gum dissolved at a temperature of 85-90 °C for about 20 min while being shaken continuously up to complete solubilisation.

Third dispersion: an aqueous dispersion of agar-agar at 1% w/v was prepared, the agar-agar dissolved at a temperature of 85-90 °C for about 20 min while being shaken continuously up to complete solubilisation.

The bite-size mozzarella morsels were drained and dried with absorbent paper and then placed in the first dispersion for 30 s - 2 min, and subsequently immersed in the calcium chloride solution for 30 s - 2 min. The excess calcium was washed away using distilled water. The treated products were immersed in the second dispersion for 30 s - 2 min, and subsequently in the calcium chloride solution for 30 s - 2 min. The excess calcium was washed away using distilled water. Lastly the treated products were immersed in the third dispersion for 30 s - 2 min, and subsequently in the calcium chloride solution for 30 s - 2 min. The excess calcium was washed away using distilled water.

In this way a first sample was obtained that consists of a packaging for a food product, a morsel of mozzarella, the wrapping of which is made of an edible multilayer material according to the invention.

### Example 2: Food product: pear juice

Calcium lactate was added in powder form to the pear juice up to a relative concentration of 2 % w/v, dissolving the above-mentioned salt and shaking continuously up to complete solubilisation in the pear juice, so as to be able to obtain a processable fluid.

A 10 ml portion of the processable fluid was solidified.

An aqueous solution of calcium lactate at 2% w/v was prepared, the salt dissolved and shaken continuously up to complete solubilisation.

First dispersion: an aqueous dispersion of sodium alginate at 2% w/v was prepared, the alginate dissolved at a temperature of 85-90 °C for about 20 min while being shaken continuously up to complete solubilisation.

Second dispersion: an aqueous dispersion of gellan gum at 0.5% w/v was prepared, the gellan gum dissolved at a temperature of 85-90 °C for about 20 min while being shaken continuously up to complete solubilisation.

Third dispersion: an aqueous dispersion of agar-agar at 1% w/v was prepared, the agar-agar dissolved at a temperature of 85-90 °C for about 20 min while being shaken continuously up to complete solubilisation.

The frozen solid was immersed in the first dispersion for 30 s - 2 min, and subsequently in the calcium chloride solution for 30 s - 2 min. The excess calcium was washed away using distilled water. The treated product was immersed in the second dispersion for 30 s - 2 min, and subsequently in the calcium chloride solution for 30 s - 2 min. The excess calcium was washed away using distilled water. Lastly the treated product was immersed in the third dispersion for 30 s - 2 min, and subsequently in the calcium chloride solution for 30 s - 2 min. The excess calcium was washed away using distilled water.

In this way a second sample was obtained that consists of a packaging for a food product, pear juice, the wrapping of which is made of an edible multilayer material according to the invention.

### Comparative example 3 - Food product: pear juice

Calcium lactate was added in powder form to the pear juice up to a relative concentration of 2 % w/v, dissolving the above-mentioned salt and shaking continuously up to complete solubilisation, so as to be able to obtain a processable fluid.

A 10 ml portion of the processable fluid was solidified.

An aqueous solution of calcium lactate at 2% w/v was prepared, the salt dissolved and shaken continuously up to complete solubilisation.

Dispersion: an aqueous dispersion of sodium alginate at 2% w/v was prepared, the hydrocolloid substance dissolved at a temperature of 85-90 °C for about 20 min while being shaken continuously up to complete solubilisation.

The frozen solid was immersed in the dispersion for 30 s - 2 min, and subsequently in the calcium chloride solution for 30 s - 2 min. The excess calcium was washed away using distilled water. Lastly the treated product was immersed in the dispersion for 30 s - 2 min, and subsequently in the calcium chloride solution for 30 s - 2 min. The excess calcium was washed away using distilled water. Lastly the treated product was immersed in the dispersion for 30 s - 2 min, and subsequently in the calcium chloride solution for 30 s - 2 min. The excess calcium was washed away using distilled water.

In this way a third sample was obtained constituted by a packaging for a food product, pear juice, the wrapping of which is made of an edible multilayer material according to the invention.

### Breaking load

The second and third sample were subjected to compression stress by increasing weights. The data relating to the integrity of the relative wrapping is reported in table 1.

**Table 1**

| weights (f) | Second sample | Third sample |
|---|---|---|
| 5 | wrapping undamaged | wrapping undamaged |
| 10 | wrapping undamaged | wrapping undamaged |
| 20 | wrapping undamaged | wrapping undamaged |
| 50 | wrapping undamaged | wrapping undamaged |
| 100 | wrapping undamaged | wrapping broken |
| 200 | wrapping undamaged | wrapping broken |

From the comparison between the data relative to the second and third sample, it emerges that the multilayer material according to the invention guarantees a greater resistance to the breaking load. This means that the second sample can be packaged in secondary packaging, also known as multiple packaging, in a greater quantity with respect to the third sample. This is because the second sample can withstand a greater weight without breaking. It is clear that by using wrappings in edible multilayer material according to the invention it is possible to reduce the number of secondary packagings and thus reduce the quantity of secondary packagings and consequently the waste deriving therefrom and the relative transport and eliminating/recycling costs.

**Drop resistance** The first sample was subjected to a drop at progressively increasing heights. The data relating to the integrity of the relative wrapping is reported in table 2.

**Table 2**

| height of drop (cm) | Observable result |
|---|---|
| 5 | Wrapping undamaged |
| 10 | wrapping undamaged |
| 15 | wrapping undamaged |
| 20 | wrapping undamaged |
| 25 | wrapping undamaged |
| 30 | wrapping undamaged |
| 35 | wrapping undamaged |
| 40 | wrapping undamaged |
| 45 | wrapping undamaged |
| 50 | wrapping undamaged |

The resistance and the elasticity of the multilayer material of the invention were thus demonstrated

**Temperature resilience test**: the first and the second sample were subjected to heat stress by progressively rising temperatures. The data relating to the variation of the structure of the various wrappings have been changed with respect to table 3. Note that at temperatures of above 50°C, the morsel of mozzarella melts.

**Table 3**

| temperature (°C) | First sample | Second sample |
|---|---|---|
| ≤ 5 | no change | no change |
| 10 | no change | no change |
| 15 | no change | no change |
| 20 | no change | no change |
| 25 | no change | no change |
| 30 | no change | no change |
| 35 | no change | no change |
| 40 | no change | no change |
| 45 | no change | no change |
| 50 | no change | no change |

The data included in table 3 shows that a wrapping made of a material according to the invention is suitable to be used to package food products the transport and stocking and locating of which in the retail outlet does not require cooling and which, especially during the step of transport and stocking, might be exposed to temperatures of higher than ambient temperature.

## Claims

1. An edible multilayer material comprising:
- a first layer, which is edible, solid and obtainable by reaction of: a first dispersion which is colloid, aqueous, edible and comprising: a single first hydrocolloid substance and, optionally, a food additive and/or a probiotic, with a cation of a bivalent metal selected from a group consisting of calcium, magnesium, strontium and zinc;
- a second layer, which is edible, solid, arranged on the first layer, and obtainable by reaction of said cation with a second dispersion which is colloid, aqueous, edible and comprising: a compound selected from a group consisting of:
a second hydrocolloid substance; cellulose; an edible wax and an edible resin, the second dispersion optionally comprising a food additive and/or a probiotic; and
- a third layer which is edible, solid, arranged on the second layer, on the opposite side respect to the first layer, and is obtainable by reaction of the cation with a third dispersion which is colloid, aqueous, edible and comprising: a single third hydrocolloid substance and, optionally, a food additive and/or a probiotic; wherein the first hydrocolloid substance, and the third hydrocolloid substance are different to one another and wherein, if the second hydrocolloid substance is present, the second hydrocolloid substance is different from the first hydrocolloid substance and third hydrocolloid substance,
wherein the first hydrocolloid substance is selected from a group consisting of: alginates and xanthan gum; the second hydrocolloid substance, when present, is selected from a group consisting of: starches; gellan and carob seed flours, the third hydrocolloid substance is selected from a group consisting of: agar; carrageenan; galactomannans; cellulose derivatives; and konjac, and/or the compound is selected from a group consisting of: cellulose; resins and waxes of animal or vegetable origin,
or wherein:
- the first hydrocolloid substance is agar-agar, the second hydrocolloid substance is gellan gum and the third hydrocolloid substance is alginate;
- the first hydrocolloid substance is agar-agar, the second hydrocolloid substance is a starch and the third hydrocolloid substance is alginate;
- the first hydrocolloid substance is agar-agar, the second hydrocolloid substance is konjac and the third hydrocolloid substance is alginate;
- the first hydrocolloid substance is agar-agar, the second hydrocolloid substance is starch and the third hydrocolloid substance is cellulose;
- the first hydrocolloid substance is agar-agar, the second hydrocolloid substance is gellan gum and the third hydrocolloid substance is cellulose;
- the first hydrocolloid substance is agar-agar, the second hydrocolloid substance is konjac and the third hydrocolloid substance is cellulose;
- the first hydrocolloid substance is alginate, the second hydrocolloid substance is starch and the third hydrocolloid substance is cellulose;
- the first hydrocolloid substance is alginate, the second hydrocolloid substance is gellan gum and the third hydrocolloid substance is cellulose; and
- the first hydrocolloid substance is alginate, the second hydrocolloid substance is konjac and the third hydrocolloid substance is a cellulose derivative.

2. The edible multilayer material of the preceding claim, wherein the first hydrocolloid substance is selected from a group consisting of: alginates and xanthan gum; the second hydrocolloid substance, when present, is selected from a group consisting of: starches; gellan and carob seed flours, the third hydrocolloid substance is selected from a group consisting of: agar; carrageenan; galactomannans; cellulose derivatives; and konjac, and/or the compound is selected from a group consisting of: cellulose; resins and waxes of animal or vegetable origin,

3. The edible multilayer material of claim 1, wherein:
- the first hydrocolloid substance is agar-agar, the second hydrocolloid substance is gellan gum and the third hydrocolloid substance is alginate;
- the first hydrocolloid substance is agar-agar, the second hydrocolloid substance is a starch and the third hydrocolloid substance is alginate;
- the first hydrocolloid substance is agar-agar, the second hydrocolloid substance is konjac and the third hydrocolloid substance is alginate;
- the first hydrocolloid substance is agar-agar, the second hydrocolloid substance is starch and the third hydrocolloid substance is cellulose;
- the first hydrocolloid substance is agar-agar, the second hydrocolloid substance is gellan gum and the third hydrocolloid substance is cellulose;
- the first hydrocolloid substance is agar-agar, the second hydrocolloid substance is konjac and the third hydrocolloid substance is cellulose;
- the first hydrocolloid substance is alginate, the second hydrocolloid substance is starch and the third hydrocolloid substance is cellulose;
- the first hydrocolloid substance is alginate, the second hydrocolloid substance is gellan gum and the third hydrocolloid substance is cellulose; and
- the first hydrocolloid substance is alginate, the second hydrocolloid substance is konjac and the third hydrocolloid substance is a cellulose derivative.

4. A production method of an edible multilayer material according to claims from 1 to 3, comprising following steps:
- preparing a first dispersion which is colloid, aqueous, edible and comprising: only a single first hydrocolloid substance; and, optionally, a food additive and/or a probiotic;
- preparing a second dispersion which is aqueous, edible comprising a compound selected from a group consisting of: a second hydrocolloid substance; cellulose; an edible wax; an edible resin; and, optionally, a food additive and/or a probiotic;
- preparing a third dispersion which is colloid, aqueous,edible and comprising: only a single third hydrocolloid substance; and, optionally, a food additive and/or a probiotic; wherein the first hydrocolloid substance, and the third hydrocolloid substance are different to one another and wherein, if the second hydrocolloid substance is present, the second hydrocolloid substance is different from the first hydrocolloid substance and third hydrocolloid substance;
- preparing an aqueous solution comprising a cation of a bivalent metal selected from a group consisting of calcium, magnesium, strontium and zinc;
- uniformly and singly distributing the first, second and third dispersion on a relative support surface so as to obtain, respectively, a first, a second and a third liquid film;
- drying the first, second and third liquid film so as to respectively obtain a first, a second and a third solid film;
- optionally distributing said aqueous solution on the first solid film and/or second solid film and/or third solid film;
- coupling a surface of the first solid film to a first surface of the second solid film distributing on at least one of the surfaces, water vapour, a glue, an adhesive or said aqueous solution and/or heating at least one of the surfaces; and pressing the first solid film and second solid film onto one another; wherein, when the preceding optional distribution step is not carried out, at least the aqueous solution is distributed at least on one of the surfaces to be coupled;
- coupling a surface of the third solid film to a second surface of the second solid film, opposite the first surface of the second solid film, distributing, on at least one of the surfaces to be coupled, water vapour, a glue, an adhesive or said aqueous solution and/or by heating at least one of these surfaces; and pressing the second solid film and third solid film on one another, wherein, when the preceding optional distribution step is not carried out, at least said aqueous solution is distributed at least on one of said surfaces to be coupled.

5. A packaging method of a food product comprising following steps:
- having available a food product;
- realising a wrapping in direct contact with a portion of the food product; the method being **characterised in that** the wrapping is made of an edible multilayer material of claims from 1 to 3.

6. The packaging method of the preceding claim, comprising following steps:
- having available a portion of a solid food product;
- having available a sheet made of the edible multilayer material according to any claim from 1 to 3 and obtainable by actuating the production method according to claim 4;
- arranging the sheet about the portion of the solid foodstuff, surrounding the portion completely and with the flaps of the sheet next to and/or superposed on one another and with the first layer of the edible multilayer material being in contact with a portion of a food product:
- joining the flaps of the next to and/or superposed sheet by means of water vapour, a glue, an adhesive or said aqueous solution and/or heating at least one of the flaps and pressing the flaps to one another.

7. The packaging method of claim 5, wherein the food product is a solid food product, the packaging method is automatic and comprises following steps:
- making available a plurality of portions of the solid foodstuff;
- making available a strip of edible multilayer material according to claims from 1 to 3, said strip having relative longitudinal edges;
- automatically superposing the longitudinal edges of the strip, automatically joining them to one another, by means of water vapour, a glue, an adhesive or an aqueous solution comprising a cation of a bivalent metal selected from a group consisting of calcium, magnesium, strontium and zinc, and/or heat, and a subsequent or contemporary pressure, obtaining a tubular portion of the edible multilayer covering;
- automatically closing the tubular portion at a relative lower transversal section of the tubular portion, by means of water vapour, a glue, an adhesive or said aqueous solution and/or heat, and applying a following or contemporary pressure in order to obtain an open container realised in the edible multilayer covering;
- automatically inserting at least a portion of the plurality of portions in the open container, obtaining an open and filled container;
- automatically closing the open and filled container, at a relative upper section thereof by means of water vapour, a glue, an adhesive or said aqueous solution and/or heat, and a following or contemporary pressure, thus obtaining a closed container in the edible multilayer covering.

8. A food group, comprising a portion of a food product and a wrapping made of an edible multilayer material of any one of preceding claims 1 to 3, with the relative first layer in contact with the portion of food product.

9. The food group of the preceding claim, wherein the food product is coffee in granules, ground, liquid, or is coffee in granular form.

## Patentansprüche

1. Essbares mehrschichtiges Material, umfassend:
- eine erste Schicht, die essbar, fest und erhältlich ist durch die Umsetzung von: einer ersten Dispersion, die kolloid, wässrig und essbar ist und umfasst: eine einzige, erste hydrokolloide Substanz und, optional, einen Lebensmittelzusatzstoff und/oder ein Probiotikum, mit einem Kation eines bivalenten Metalls, ausgewählt aus einer Gruppe bestehend aus Calcium, Magnesium, Strontium und Zink;
- eine zweite Schicht, die essbar, fest und auf der ersten Schicht angeordnet ist, und erhältlich ist durch die Umsetzung des genannten Kations mit einer zweiten Dispersion, die kolloid, wässrig und essbar ist und umfasst: eine Verbindung, ausgewählt aus einer Gruppe bestehend aus:
einer zweiten hydrokolloiden Substanz; Cellulose; einem essbaren Wachs und einem essbaren Harz, wobei die zweite Dispersion optional einen Lebensmittelzusatzstoff und/oder ein Probiotikum umfasst; und
- eine dritte Schicht, die essbar, fest und auf der zweiten Schicht angeordnet ist, auf der in Bezug auf die erste Schicht gegenüberliegenden Seite, und erhältlich ist durch die Umsetzung des Kations mit einer dritten Dispersion, die kolloid, wässrig und essbar ist und umfasst: eine einzige dritte hydrokolloide Substanz und, optional, einen Lebensmittelzusatzstoff und/oder ein Probiotikum;
wobei die erste hydrokolloide Substanz und die dritte hydrokolloide Substanz voneinander verschieden sind und wobei, wenn die zweite hydrokolloide Substanz vorhanden ist, die zweite hydrokolloide Substanz von der ersten hydrokolloiden Substanz und der dritten hydrokolloiden Substanz verschieden ist,
wobei die erste hydrokolloide Substanz ausgewählt ist aus einer Gruppe bestehend aus: Alginaten und Xanthan; die zweite hydrokolloide Substanz, sofern vorhanden, ausgewählt ist aus einer Gruppe bestehend aus: Stärken; Gellan und Johannisbrotkernmehlen; die dritte hydrokolloide Substanz ausgewählt ist aus einer Gruppe bestehend aus: Agar; Carrageen; Galactomannanen; Cellulosederivaten; und Konjak, und/oder die Verbindung ausgewählt ist aus einer Gruppe bestehend aus: Cellulose; Harzen und Wachsen tierischen oder pflanzlichen Ursprungs, oder wobei:
- die erste hydrokolloide Substanz Agar-Agar ist, die zweite hydrokolloide Substanz Gellan ist und die dritte hydrokolloide Substanz Alginat ist;
- die erste hydrokolloide Substanz Agar-Agar ist, die zweite hydrokolloide Substanz eine Stärke ist und die dritte hydrokolloide Substanz Alginat ist;
- die erste hydrokolloide Substanz Agar-Agar ist, die zweite hydrokolloide Substanz Konjak ist und die dritte hydrokolloide Substanz Alginat ist;
- die erste hydrokolloide Substanz Agar-Agar ist, die zweite hydrokolloide Substanz Stärke ist und die dritte hydrokolloide Substanz Cellulose ist;
- die erste hydrokolloide Substanz Agar-Agar ist, die zweite hydrokolloide Substanz Gellan ist und die dritte hydrokolloide Substanz Cellulose ist;
- die erste hydrokolloide Substanz Agar-Agar ist, die zweite hydrokolloide Substanz Konjak ist und die dritte hydrokolloide Substanz Cellulose ist;
- die erste hydrokolloide Substanz Alginat ist, die zweite hydrokolloide Substanz Stärke ist und die dritte hydrokolloide Substanz Cellulose ist;
- die erste hydrokolloide Substanz Alginat ist, die zweite hydrokolloide Substanz Gellan ist und die dritte hydrokolloide Substanz Cellulose ist; und
- die erste hydrokolloide Substanz Alginat ist, die zweite hydrokolloide Substanz Konjak ist und die dritte hydrokolloide Substanz ein Cellulosederivat ist.

2. Essbares mehrschichtiges Material nach dem vorhergehenden Anspruch, wobei die erste hydrokolloide Substanz ausgewählt ist aus einer Gruppe bestehend aus: Alginaten und Xanthan; die zweite hydrokolloide Substanz, sofern vorhanden, ausgewählt ist aus einer Gruppe bestehend aus: Stärken; Gellan und Johannisbrotkernmehlen; die dritte hydrokolloide Substanz ausgewählt ist aus einer Gruppe bestehend aus: Agar; Carrageen; Galactomannanen; Cellulosederivaten; und Konjak, und/oder die Verbindung ausgewählt ist aus einer Gruppe bestehend aus: Cellulose; Harzen und Wachsen tierischen oder pflanzlichen Ursprungs.

3. Essbares mehrschichtiges Material nach Anspruch 1, wobei:
- die erste hydrokolloide Substanz Agar-Agar ist, die zweite hydrokolloide Substanz Gellan ist und die dritte hydrokolloide Substanz Alginat ist;
- die erste hydrokolloide Substanz Agar-Agar ist, die zweite hydrokolloide Substanz eine Stärke ist und die dritte hydrokolloide Substanz Alginat ist;
- die erste hydrokolloide Substanz Agar-Agar ist, die zweite hydrokolloide Substanz Konjak ist und die dritte hydrokolloide Substanz Alginat ist;
- die erste hydrokolloide Substanz Agar-Agar ist, die zweite hydrokolloide Substanz Stärke ist und die dritte hydrokolloide Substanz Cellulose ist;
- die erste hydrokolloide Substanz Agar-Agar ist, die zweite hydrokolloide Substanz Gellan ist und die dritte hydrokolloide Substanz Cellulose ist;
- die erste hydrokolloide Substanz Agar-Agar ist, die zweite hydrokolloide Substanz Konjak ist und die dritte hydrokolloide Substanz Cellulose ist;
- die erste hydrokolloide Substanz Alginat ist, die zweite hydrokolloide Substanz Stärke ist und die dritte hydrokolloide Substanz Cellulose ist;
- die erste hydrokolloide Substanz Alginat ist, die zweite hydrokolloide Substanz Gellan ist und die dritte hydrokolloide Substanz Cellulose ist; und
- die erste hydrokolloide Substanz Alginat ist, die zweite hydrokolloide Substanz Konjak ist und die dritte hydrokolloide Substanz ein Cellulosederivat ist.

4. Verfahren zur Herstellung eines essbaren mehrschichtigen Materials nach den Ansprüchen von 1 bis 3, folgende Schritte umfassend:
- Vorbereiten einer ersten Dispersion, die kolloid, wässrig und essbar ist und nur eine einzige, erste hydrokolloide Substanz umfasst; und, optional, einen Lebensmittelzusatzstoff und/oder ein Probiotikum umfasst;
- Vorbereiten einer zweiten Dispersion, die wässrig und essbar ist und eine Verbindung umfasst, die ausgewählt ist aus einer Gruppe bestehend aus: einer zweiten hydrokolloiden Substanz; Cellulose; einem essbaren Wachs; einem essbaren Harz, und, optional, einem Lebensmittelzusatzstoff und/oder einem Probiotikum;
- Vorbereiten einer dritten Dispersion, die kolloid, wässrig und essbar ist und umfasst: nur eine einzige dritte hydrokolloide Substanz; und, optional, einen Lebensmittelzusatzstoff und/oder ein Probiotikum; wobei die erste hydrokolloide Substanz und die dritte hydrokolloide Substanz voneinander verschieden sind und wobei, sofern die zweite hydrokolloide Substanz vorhanden ist, die zweite hydrokolloide Substanz von der ersten hydrokolloiden Substanz und der dritten hydrokolloiden Substanz verschieden ist;
- Vorbereiten einer wässrigen Lösung, umfassend ein Kation eines bivalenten Metalls, ausgewählt aus einer Gruppe bestehend aus Calcium, Magnesium, Strontium und Zink;
- gleichmäßiges und einzelnes Verteilen der ersten, zweiten und dritten Dispersion auf einer entsprechenden Auflagefläche, um jeweils einen ersten, einen zweiten und einen dritten Flüssigkeitsfilm zu erhalten;
- Trocknen des ersten, zweiten und dritten Flüssigkeitsfilms, um jeweils einen ersten, einen zweiten und einen dritten festen Film zu erhalten;
- optionales Verteilen der wässrigen Lösung auf dem ersten festen Film und/oder zweiten festen Film und/oder dritten festen Film;
- Verbinden einer Fläche des ersten festen Films mit einer ersten Fläche des zweiten festen Films durch Verteilen, auf zumindest einer der Flächen, von Wasserdampf, einem Klebstoff, einem Haftmittel oder der wässrigen Lösung und/oder Erwärmen von zumindest einer der Flächen, und Aneinanderdrücken des ersten festen Films und des zweiten festen Films, wobei, wenn der vorhergehende optionale Schritt des Verteilens nicht ausgeführt wird, zumindest die wässrige Lösung zumindest auf einer der zu verbindenden Flächen verteilt wird,
- Verbinden einer Fläche des dritten festen Films mit einer zweiten Fläche des zweiten festen Films, die der ersten Fläche des zweiten festen Films gegenüberliegt, durch Verteilen, auf zumindest einer der zu verbindenden Flächen, von Wasserdampf, einem Klebstoff, einem Haftmittel oder der wässrigen Lösung und/oder durch Erwärmen von zumindest einer dieser Flächen, und Aneinanderdrücken des zweiten festen Films und des dritten festen Films, wobei, wenn der vorhergehende optionale Schritt des Verteilens nicht ausgeführt wird, zumindest die wässrige Lösung zumindest auf einer der zu verbindenden Flächen verteilt wird.

5. Verfahren zum Verpacken eines Lebensmittelprodukts, folgende Schritte umfassend:
- Bereitstellen eines Lebensmittelprodukts;
- Herstellen einer Umhüllung in direktem Kontakt mit einer Portion des Lebensmittelprodukts; wobei das Verfahren **dadurch gekennzeichnet ist, dass** die Umhüllung aus einem essbaren mehrschichtigen Material nach den Ansprüchen von 1 bis 3 hergestellt ist.

6. Verpackungsverfahren nach dem vorhergehenden Anspruch, folgende Schritte umfassend:
- Bereitstellen einer Portion eines festen Lebensmittelprodukts;
- Bereitstellen eines Bogens, der aus dem essbaren mehrschichtigen Material nach einem der Ansprüche von 1 bis 3 hergestellt ist und durch das Ausführung des Herstellungsverfahrens nach Anspruch 4 erhältlich ist;
- Anordnen des Bogens um die Portion des festen Lebensmittels, so dass die Portion vollständig umhüllt wird und die Randlappen des Bogens einander angenähert und/oder überlagert sind und die erste Schicht des essbaren mehrschichtigen Materials in Kontakt mit einer Portion eines Lebensmittelprodukts sind;
- Verbinden der einander angenäherten und/oder überlagerten Randlappen des Bogens mittels Wasserdampf, einem Klebstoff, einem Haftmittel oder der wässrigen Lösung und/oder Erwärmen zumindest eines der Randlappen und Aneinanderdrücken der Randlappen.

7. Verpackungsverfahren nach Anspruch 5, wobei das Lebensmittelprodukt ein festes Lebensmittelprodukt ist, das Verpackungsverfahren automatisch ist und folgende Schritte umfasst:
- Bereitstellen einer Vielzahl von Portionen des festen Lebensmittels,
- Bereitstellen eines Streifens von essbarem mehrschichtigem Material nach den Ansprüchen von 1 bis 3, wobei der Streifen entsprechende Längskanten aufweist;
- automatisches Überlagern der Längskanten des Streifens, deren automatisches Verbinden miteinander, mittels Wasserdampf, einem Klebstoff, einem Haftmittel oder einer wässrigen Lösung, beinhaltend ein Kation eines bivalenten Metalls, ausgewählt aus einer Gruppe bestehend aus Calcium, Magnesium, Strontium und Zink, und/oder Wärme, und anschließendem oder gleichzeitigem Drücken, so dass ein röhrenförmiger Abschnitt der essbaren mehrschichtigen Umhüllung erhalten wird,
- automatisches Verschließen des röhrenförmigen Abschnitts an einem entsprechenden unteren Querbereich des röhrenförmigen Abschnitts mittels Wasserdampf, einem Klebstoff, einem Haftmittel oder der wässrigen Lösung und/oder Wärme, und anschließender oder gleichzeitiger Druckanwendung, um einen aus der essbaren mehrschichtigen Umhüllung hergestellten offenen Behälter zu erhalten;
- automatisches Eingeben von zumindest einer Portion der Vielzahl von Portionen in den offenen Behälter, um einen offenen und gefüllten Behälter zu erhalten;
- automatisches Verschließen des offenen und gefüllten Behälters, an einem entsprechenden oberen Bereich davon, mittels Wasserdampf, einem Klebstoff, einem Haftmittel oder der wässrigen Lösung und/oder Wärme, und anschließendem oder gleichzeitigem Drücken, um einen aus der essbaren mehrschichtigen Umhüllung hergestellten verschlossenen Behälter zu erhalten.

8. Lebensmittelgruppierung, umfassend eine Portion eines Lebensmittelprodukts und eine Umhüllung, die aus einem essbaren mehrschichtigen Material nach einem der vorhergehenden Ansprüche 1 bis 3 hergestellt ist, wobei die entsprechende erste Schicht in Kontakt mit der Portion des Lebensmittelprodukts ist.

9. Lebensmittelgruppierung nach dem vorhergehenden Anspruch, wobei das Lebensmittelprodukt Kaffee in Bohnen, gemahlen, flüssig, oder Kaffee in Granulatform ist.

## Revendications

1. Un matériau multicouche comestible comprenant :
- une première couche, qui est comestible, solide et peut être obtenue par réaction de : une première dispersion qui est colloïdale, aqueuse, comestible et comprenant : une seule première substance hydrocolloïde et, optionnellement, un additif alimentaire et/ou un probiotique, avec un cation d'un métal bivalent choisi dans un groupe constitué de calcium, magnésium, strontium et zinc ;
- une deuxième couche, qui est comestible, solide, disposée sur la première couche, et peut être obtenue par réaction dudit cation avec une deuxième dispersion qui est colloïdale, aqueuse, comestible et comprenant : un composé choisi dans un groupe constitué de : une deuxième substance hydrocolloïde ; cellulose ; une cire comestible et une résine comestible, la deuxième dispersion comprenant optionnellement un additif alimentaire et/ou un probiotique ;
et
- une troisième couche qui est comestible, solide, disposée sur la deuxième couche, du côté opposé par rapport à la première couche, et peut être obtenue par réaction du cation avec une troisième dispersion qui est colloïdale, aqueuse, comestible et comprenant : une seule troisième substance hydrocolloïde et, optionnellement, un additif alimentaire et/ou un probiotique ;
dans lequel la première substance hydrocolloïde et la troisième substance hydrocolloïde sont différentes l'une de l'autre et dans lequel, si la deuxième substance hydrocolloïde est présente, la deuxième substance hydrocolloïde est différente de la première substance hydrocolloïde et de la troisième substance hydrocolloïde, dans lequel la première substance hydrocolloïde est choisie dans un groupe constitué de : alginates et gomme de xanthane ; la deuxième substance hydrocolloïde, si présente, est choisie dans un groupe constitué de : amidons ; gellane et farines de graines de caroube ; la troisième substance hydrocolloïde est choisie dans un groupe constitué de : agar ; carraghénine ; galactomannanes ; dérivés de cellulose ; et konjac, et/ou le composé est choisi dans un groupe constitué de : cellulose ; résines et cires d'origine animale ou végétale,
ou dans lequel :
- la première substance hydrocolloïde est de l'agar-agar, la deuxième substance hydrocolloïde est de la gomme de gellane et la troisième substance hydrocolloïde est un alginate ;
- la première substance hydrocolloïde est de l'agar-agar, la deuxième substance hydrocolloïde est un amidon et la troisième substance hydrocolloïde est un alginate ;
- la première substance hydrocolloïde est de l'agar-agar, la deuxième substance hydrocolloïde est du konjac et la troisième substance hydrocolloïde est un alginate ;
- la première substance hydrocolloïde est de l'agar-agar, la deuxième substance hydrocolloïde est un amidon et la troisième substance hydrocolloïde est de la cellulose ;
- la première substance hydrocolloïde est de l'agar-agar, la deuxième substance hydrocolloïde est de la gomme de gellane et la troisième substance hydrocolloïde est de la cellulose ;
- la première substance hydrocolloïde est de l'agar-agar, la deuxième substance hydrocolloïde est du konjac et la troisième substance hydrocolloïde est de la cellulose ;
- la première substance hydrocolloïde est un alginate, la deuxième substance hydrocolloïde est un amidon et la troisième substance hydrocolloïde est de la cellulose ;
- la première substance hydrocolloïde est un alginate, la deuxième substance hydrocolloïde est de la gomme de gellane et la troisième substance hydrocolloïde est de la cellulose ; et
- la première substance hydrocolloïde est un alginate, la deuxième substance hydrocolloïde est du konjac et la troisième substance hydrocolloïde est un dérivé de cellulose.

2. Le matériau multicouche comestible selon la revendication précédente, dans lequel la première substance hydrocolloïde est choisie dans un groupe constitué de : alginates et gomme de xanthane ; la deuxième substance hydrocolloïde, si présente, est choisie dans un groupe constitué de : amidons ; gellane et farines de graines de caroube ; la troisième substance hydrocolloïde est choisie dans un groupe constitué de : agar ; carraghénine ; galactomannanes ; dérivés de cellulose ; et konjac, et/ou le composé est choisi dans un groupe constitué de : cellulose ; résines et cires d'origine animale ou végétale.

3. Le matériau multicouche comestible selon la revendication 1, dans lequel :
- la première substance hydrocolloïde est de l'agar-agar, la deuxième substance hydrocolloïde est de la gomme de gellane et la troisième substance hydrocolloïde est un alginate ;
- la première substance hydrocolloïde est de l'agar-agar, la deuxième substance hydrocolloïde est un amidon et la troisième substance hydrocolloïde est un alginate ;
- la première substance hydrocolloïde est de l'agar-agar, la deuxième substance hydrocolloïde est du konjac et la troisième substance hydrocolloïde est un alginate ;
- la première substance hydrocolloïde est de l'agar-agar, la deuxième substance hydrocolloïde est un amidon et la troisième substance hydrocolloïde est de la cellulose ;
- la première substance hydrocolloïde est de l'agar-agar, la deuxième substance hydrocolloïde est de la gomme de gellane et la troisième substance hydrocolloïde est de la cellulose ;
- la première substance hydrocolloïde est de l'agar-agar, la deuxième substance hydrocolloïde est du konjac et la troisième substance hydrocolloïde est de la cellulose ;
- la première substance hydrocolloïde est un alginate, la deuxième substance hydrocolloïde est un amidon et la troisième substance hydrocolloïde est de la cellulose ;
- la première substance hydrocolloïde est un alginate, la deuxième substance hydrocolloïde est de la gomme de gellane et la troisième substance hydrocolloïde est de la cellulose ; et
- la première substance hydrocolloïde est un alginate, la deuxième substance hydrocolloïde est du konjac et la troisième substance hydrocolloïde est un dérivé de cellulose.

4. Un procédé de production d'un matériau multicouche comestible selon les revendications de 1 à 3, comprenant les étapes suivantes :
- préparer une première dispersion qui est colloïdale, aqueuse, comestible et comprenant : uniquement une seule première substance hydrocolloïde ; et, optionnellement, un additif alimentaire et/ou un probiotique ;
- préparer une deuxième dispersion qui est aqueuse, comestible et comprenant un composé choisi dans un groupe constitué de : une deuxième substance hydrocolloïde ; cellulose ; une cire comestible ; une résine comestible ; et, optionnellement, un additif alimentaire et/ou un probiotique ;
- préparer une troisième dispersion qui est colloïdale, aqueuse, comestible et comprenant : uniquement une seule troisième substance hydrocolloïde ; et, optionnellement, un additif alimentaire et/ou un probiotique ; dans lequel la première substance hydrocolloïde et la troisième substance hydrocolloïde sont différentes l'une de l'autre et dans lequel, si la deuxième substance hydrocolloïde est présente, la deuxième substance hydrocolloïde est différente de la première substance hydrocolloïde et de la troisième substance hydrocolloïde ;
- préparer une solution aqueuse comprenant un cation d'un métal bivalent choisi dans un groupe constitué de calcium, magnésium, strontium et zinc ;
- distribuer uniformément et individuellement la première, deuxième et troisième dispersion sur une surface de support correspondante de manière à obtenir, respectivement, un premier, un deuxième et un troisième film liquide ;
- sécher le premier, le deuxième et le troisième film liquide de manière à obtenir, respectivement, un premier, un deuxième et un troisième film solide ;
- optionnellement, distribuer ladite solution aqueuse sur le premier film solide et/ou deuxième film solide et/ou troisième film solide ;
- accoupler une surface du premier film solide à une première surface du deuxième film solide en distribuant sur au moins une des surfaces de la vapeur d'eau, une colle, un adhésif ou ladite solution aqueuse et/ou en chauffant au moins une des surfaces ; et en pressant le premier film solide et le deuxième film solide l'un sur l'autre ; dans lequel, lorsque l'étape de distribution optionnelle précédente n'est pas effectuée, au moins la solution aqueuse est distribuée au moins sur une des surfaces à accoupler ;
- accoupler une surface du troisième film solide à une deuxième surface du deuxième film solide, opposée à la première surface du deuxième film solide, en distribuant, sur au moins une des surfaces à accoupler de la vapeur d'eau, une colle, un adhésif ou ladite solution aqueuse et/ou en chauffant au moins une de ces surfaces ; et en pressant le deuxième film solide et le troisième film solide l'un sur l'autre, dans lequel, lorsque l'étape de distribution optionnelle précédente n'est pas effectuée, au moins ladite solution aqueuse est distribuée au moins sur une desdites surfaces à accoupler.

5. Un procédé d'emballage d'un produit alimentaire comprenant les étapes suivantes :
- rendre disponible un produit alimentaire ;
- réaliser une enveloppe en contact direct avec une portion du produit alimentaire ; le procédé étant **caractérisé en ce que** l'enveloppe est réalisée dans un matériau multicouche comestible selon les revendications de 1 à 3.

6. Le procédé d'emballage selon la revendication précédente, comprenant les étapes suivantes :
- rendre disponible une portion d'un produit alimentaire solide ;
- rendre disponible une feuille réalisée dans le matériau multicouche comestible selon l'une quelconque des revendications de 1 à 3 et pouvant être obtenu en mettant en œuvre le procédé de production selon la revendication 4 ;
- disposer la feuille sur la portion du produit alimentaire solide, en entourant complètement la portion et avec les pans de la feuille accolés et/ou superposés l'un sur l'autre et avec la première couche du matériau multicouche comestible en contact avec une portion d'un produit alimentaire ;
- joindre les pans de la feuille, qui sont accolés et/ou superposés, au moyen de vapeur d'eau, une colle, un adhésif ou ladite solution aqueuse et/ou chauffer au moins un des pans et presser les pans entre eux.

7. Le procédé d'emballage selon la revendication 5, dans lequel le produit alimentaire est un produit alimentaire solide, le procédé d'emballage est automatique et comprend les étapes suivantes :
- rendre disponible une pluralité de portions du produit alimentaire solide ;
- rendre disponible une bande de matériau multicouche comestible selon les revendications de 1 à 3, ladite bande ayant des bords longitudinaux correspondants ;
- superposer automatiquement les bords longitudinaux de la bande, les joindre automatiquement l'un à l'autre, au moyen de vapeur d'eau, une colle, un adhésif ou une solution aqueuse comprenant un cation d'un métal bivalent choisi dans un groupe constitué de calcium, magnésium, strontium et zinc, et/ou chaleur, et une pression successive ou simultanée, obtenant une portion tubulaire du revêtement multicouche comestible ;
- fermer automatiquement la portion tubulaire au niveau d'une section transversale inférieure correspondante de la portion tubulaire, au moyen de vapeur d'eau, une colle, un adhésif ou ladite solution aqueuse et/ou chaleur, et appliquer une pression successive ou simultanée de manière à obtenir un contenant ouvert réalisé dans le revêtement multicouche comestible ;
- insérer automatiquement au moins une portion de la pluralité de portions dans le contenant ouvert, obtenant un contenant ouvert et rempli ;
- fermer automatiquement le contenant ouvert et rempli, au niveau d'une section supérieure correspondante de celui-ci au moyen de vapeur d'eau, une colle, un adhésif ou ladite solution aqueuse et/ou chaleur, et une pression successive ou simultanée, obtenant ainsi un contenant fermé réalisé dans le revêtement multicouche comestible.

8. Un groupe alimentaire, comprenant une portion d'un produit alimentaire et une enveloppe réalisée dans un matériau multicouche comestible selon l'une quelconque des revendications de 1 à 3, avec la première couche correspondante en contact avec la portion de produit alimentaire.

9. Le groupe alimentaire selon la revendication précédente, dans lequel le produit alimentaire est du café en grains, moulu, liquide, ou est du café sous forme granulaire.
